# EUROPEAN PATENT SPECIFICATION

(11) **EP 2 152 065 B1**
(45) Date of publication and mention of the grant of the patent: **22.09.2010**
(21) Application number: 08723855.6
(22) Date of filing: 17.03.2008
(51) Int. Cl.: A01K 3/00

(54) **MOBILE SUPPORT, ASSEMBLY WITH A FIRST AND A SECOND MOBILE SUPPORT AND TERRAIN DEMARCATION**
BEWEGLICHER TRÄGER, ANORDNUNG MIT EINEM ERSTEN UND EINEM ZWEITEN BEWEGLICHEN TRÄGER UND GELÄNDEDEMARKATION
SUPPORT MOBILE, ENSEMBLE AVEC SUPPORT MOBILE PRIMAIRE ET SECONDAIRE ET PROCÉDÉ DE DÉMARCATION DE TERRAIN

(30) Priority: 23.05.2007 NL 1033879
(43) Date of publication of application: 17.02.2010
(73) Proprietor: Maasland N.V., 3147 PA Maassluis (NL)
(72) Inventor: VLAAR, Iwan, Yves, NL-4735 AC Zegge (NL); VAN DEN BERG, Karel, NL-2971 VB Bleskensgraaf (NL)
(74) Representative: Jennen, Peter Leonardus Hendricus
(86) International application number: PCT/NL2008/000083
(87) International publication number: WO 2008/143498

(56) References cited:
- WO-A-01/28317
- AU-B2- 512 197
- NL-A- 8 700 723

## Description

The invention relates to a mobile support for supporting a wire-shaped terrain demarcation on a ground according to the preamble of claim 1.

Such a support is known from the Dutch publication NL-8700723. This publication discloses a wheel with a plurality of spokes which are interconnected by a hub. The hub is connected to an axially orientated tube through which extends the wire to be supported. The wheel is capable of rotating about the wire.

A problem with such a device is that, in the case of axial forces on the wire, the wheel offers great resistance to a movement or displacement in axial direction, which may thus lead to breakage of the wire or breakage of a spoke. This is in particular a problem if such a wheel is drawn by means of the wire. The wheel may tilt to a considerable extent, drag over the ground, etc.

The invention aims at providing a device of the above-mentionedO type, which allows a movement over the ground in axial direction.

This is achieved by means of a mobile support of the above-mentioned type, characterized in that at least one segment has a greater flexibility in axial direction than in a direction tangential to the axial direction. When a pulling force is exerted on the support in axial direction via the terrain demarcation, the segment which is in contact with the ground at its free end will bend, and the support, with the exception of said segment, will move sideward. When the support subsequently rotates by a force in the plane of rotation, the next segment will come into contact with the ground in a position in which it has been shifted sideward in relation to the former segment. In this manner, the mobile support will yield to lateral force and, under the influence thereof, a smooth lateral movement will occur. It may be sufficient for one segment to have such a greater flexibility, and not for the other ones. Advantageously, a plurality of segments, and preferably all segments, have such a greater flexibility.

The spoke preferably comprises a pivot. In this case, the pivot may be disposed near the axis of rotation, or at any place on the spoke. It provides much freedom in the choice of material for the spoke.

In a particular embodiment according to the invention, the segment, and in particular the spoke, consists at least partially of flexible material. This allows a simple and cheap construction.

In particular, the spoke is oblate in the direction perpendicular to the axis. Such an embodiment enables in a simple manner that the preferred direction of bending is the axial direction.

In a particular embodiment, the spoke tapers outward in radial direction. This construction ensures that the maximum deflection occurs at the outer side near the circumference of the support.

In a further favourable embodiment, the segment is electrically conductive. In the case when a suitable electric tension is applied to the terrain demarcation and/or the support, animals which come into contact with the support will thus be deterred. As a result thereof, the support will be not be touched and will fulfil its function.

In this context, it is further advantageous if the segment is capable of being brought into electric contact with the terrain demarcation, depending on the position of rotation of the segment. As a result thereof, it is ensured that only particular segments will be under electric tension and it is possible to prevent the current from leaking via the spokes which are in contact with the ground. An example of features suitable for this purpose is described in NL-8700723.

The terrain demarcation is, for example, a wire, preferably an electrically conductive wire, such as metal wire, but may also comprise, for example, a ribbon or the like.

In a particular embodiment, the segment comprises a tread, which tread, viewed in axial direction, is wider than the spoke. Such a tread prevents the segment from penetrating deep into the ground and thus becoming more difficultly movable. By making the spoke relatively narrow, the spoke will move easily through grass and the like.

In a further embodiment of the invention, the tread extends in both tangential directions relative to the spoke, preferably as far as near adjacent treads. Such a construction enables a substantially completely closed circumference, so that the support can smoothly roll over the ground. This effect is reinforced if the curvature of the tread is substantially equal to the curvature of the circumference of the mobile support. However, a smaller or, on the contrary, greater local curvature is also possible.

In particular, the support comprises a central hub to connect the spokes.

In a further embodiment of the invention, the terrain demarcation is capable of being passed through the hub. This makes it possible to connect the support to the demarcation without the demarcation having to be broken. For this purpose, the hub comprises in particular a recess extending in radial direction to pass the terrain demarcation from the outside to the core of the hub. In this manner it is possible to place the support in a simple manner, without auxiliary means, around the demarcation.

The support comprises in particular a fastening for the terrain demarcation. This keeps the support always in a fixed position on the demarcation and prevents, for example, adjacent supports from moving towards each other. Such a fastening may take place in a simple manner by means of a hook, clamp or the like.

It is further advantageous if the fastening is movable in axial direction relative to the hub. This ensures that sudden jerks made by the terrain demarcation to the support can be absorbed. In this case, the position of rest remains preferably unchanged, so unshifted. Disposing the fastening movably may, for example, take place by means of a spring.

In a further favourable embodiment of the invention, the hub comprises a tubular element orientated in axial direction. By passing the demarcation through this tubular element the support will not easily fall down. In a tilted position of the support, the tubular element will also assume a tilted orientation. This ensures that extra tensile stress will be applied to the demarcation, and will thus keep the support upright.

The invention also relates to an assembly for supporting a wire-shaped terrain demarcation on a ground, comprising a first and a second mobile support according to the invention, characterized in that the supports are interconnected by means of at least one tubular element. Such an assembly will remain independently in a stable position on the ground. This means that the tensile stress need not be applied to the demarcation to keep the mobile support upright. In this case, it is also sufficient if only one tubular element is provided for the two supports together.

The invention further relates to a terrain demarcation system comprising a wire-shaped terrain demarcation and a mobile support according to the invention. The invention is not limited to a fencing for use in a pasture, but is, for example, also suitable for supporting a mobile demarcation for parking places and the like. In the case of such systems a smooth lateral movability is favourable. Preferably, the terrain demarcation system comprises at least one terrain demarcation displacing device, such as a small wagon. Preferably, the terrain demarcation displacing device is self-propelled. In this case, the greater flexibility and insusceptibility to interference come out well.

The invention will be explained hereinafter in further detail with reference to an embodiment shown in the drawing, in which:
Figure 1 is a side view of a support according to the invention;
Figure 2 is a front view of a support according to the invention.

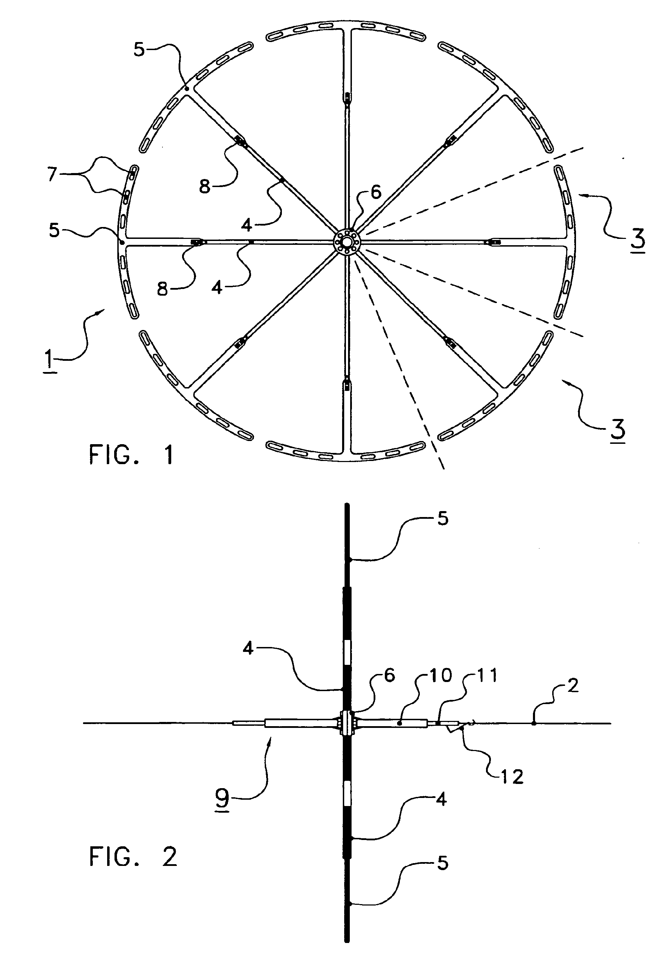

In Figure 1 is depicted a mobile support 1 for supporting a wire-shaped terrain demarcation (not visible here) on a ground, having a plurality of segments 3 rotatable about an axis, wherein each segment comprises a spoke 4 having a free end, wherein at least one segment has a greater flexibility in axial direction than in a direction tangential to the axial direction. The segment 3 consists at least partially of flexible material and comprises here a spoke 4 and a tread 5. The tread is made of flexible material. The spoke is oblate in axial direction near the circumference, and provided with a pivot 8 which connects the spoke to the tread. The pivot 8 can effect a pivoting lateral movement.

The curvature of the tread 5 is equal to the curvature of the circumference of the mobile support 1. The support comprises a central hub 6 to connect the spokes 4. The terrain demarcation 2 is capable of being passed through the hub 6.

Apertures 7 are provided in the segment 3 in order to save material and to make the support lighter.

In a not shown embodiment, the segment 3 is capable of being brought into electric contact with the terrain demarcation, depending on the position of rotation of the segment. Such an embodiment has been described extensively in Dutch publication NL-8700723 and will not be explained in further detail. The segment itself may be made of electrically conductive material, such as spring steel. However, it is also possible that a conductive strip or wire is disposed on the segment at the outer side thereof.

Figure 2 is a front view of the support 1 according to the invention. The segment 3 comprises a tread 5, which tread 5, viewed in axial direction, is wider than the spoke 4. This tread is supported on the ground and extends in both tangential directions relative to the spoke (Figure 1). The hub comprises a tubular element 9 orientated in axial direction. This tubular element comprises a first portion 10 having a great diameter in which a second portion 11 having a smaller diameter is shiftably fastened. These are disposed on both sides of the plane of the segments. The support further comprises a fastening for the terrain demarcation 2. This fastening is disposed on both sides as a hook 12 about which the demarcation is coiled. Owing to the fact that the hook 12 is connected to the second portion 11, the fastening is movable to some extent relative to the hub 6. A not depicted spring is disposed in the first portion 10 and keeps the second portion 11 in position.

The terrain demarcation is used in a (not depicted) system, for example to pasture animals. Such a system comprises one or a plurality, but preferably two, automatically movable vehicles which serve as tensioning points for the terrain demarcation. In order to limit sagging of the demarcation 2 between the tensioning points, a support according to the invention is disposed at one or a plurality of places between the tensioning points. Sagging should be limited, because the demarcation should not be too low in order to prevent animals from stepping over the demarcation. The height of the demarcation above the ground and thus the distance from the point of rotation to the ground is, for example, approximately 90 cm for cattle. When a vehicle moves, it displaces the demarcation which, itself, takes along the support. Such a pasturing system, provided with another support, has been described extensively in patent applications WO-A-0128317 and EP-A-1747719.

The use of the support is not limited to a wire, but is also suitable for any other kind of terrain demarcation, such as a rope, strip, chain or bar.

## Claims

1. Mobile support (1) for supporting a wire-shaped terrain demarcation (2) on a ground, having a plurality of segments (3) rotatable about an axis, wherein each segment (3) comprises a spoke (4) having a free end, **characterized in that** at least one segment (3) has a greater flexibility in axial direction than in a direction tangential to the axial direction.

2. Mobile support according to claim 1, **characterized in that** the spoke (4) comprises a pivot (8).

3. Mobile support according to claim 1 or 2, **characterized in that** the segment (3), and in particular the spoke (4), consists at least partially of flexible material.

4. Mobile support according to any one of the preceding claims, **characterized in that** the spoke (4) is oblate in the direction perpendicular to the axis.

5. Mobile support according to any one of the preceding claims, **characterized in that** the spoke (4) tapers in radial direction.

6. Mobile support according to any one of the preceding claims, **characterized in that** the segment (3) is electrically conductive, and preferably **in that** the segment is capable of being brought into electric contact with the terrain demarcation (2), depending on the position of rotation of the segment (3).

7. Mobile support according to any one of the preceding claims, **characterized in that** the segment (3) comprises a tread (5), which tread (5), viewed in axial direction, is wider than the spoke (4), in particular that the tread (5) extends in both tangential directions relative to the spoke (4).

8. Mobile support according to claim 7, **characterized in that** the curvature of the tread (5) is substantially equal to the curvature of the circumference of the mobile support (1).

9. Mobile support according to any one of the preceding claims, **characterized in that** the support comprises a central hub (6) to connect the spokes (4).

10. Mobile support according to claim 9, **characterized in that** the terrain demarcation (2) is capable of being passed through the hub (6).

11. Mobile support according to claim 10, **characterized in that** the hub (6) comprises a recess extending in radial direction to pass the terrain demarcation (2) from the outside to the core of the hub (6).

12. Mobile support according to claim 9, 10 or 11, **characterized in that** the support comprises a fastening (12) for the terrain demarcation (2), in particular wherein the fastening (12) is movable in axial direction relative to the hub (6).

13. Mobile support according to any one of claims 9 to 12, **characterized in that** the hub (6) comprises a tubular element (9, 10, 11) orientated in axial direction.

14. Assembly for supporting a wire-shaped terrain demarcation (2) on a ground, comprising a first and a second mobile support (1) according to claim 13, **characterized in that** the supports are interconnected by means of at least one tubular element (9, 10, 11).

15. Terrain demarcation system comprising a wire-shaped terrain demarcation (2) and a mobile support (1) according to any one of the preceding claims, in particular also comprising a, preferably self-propelled, terrain demarcation displacement device.

## Patentansprüche

1. Mobile Abstützung (1) zum Abstützen einer Geländeabgrenzung (2) aus Draht auf einem Grundstück, welche mehrere um eine Achse drehbare Segmente (3) aufweist, wobei jedes Segment (3) eine Speiche (4) mit einem freien Ende umfasst, **dadurch gekennzeichnet, dass** wenigstens ein Segment (3) eine größere Flexibilität in axialer Richtung aufweist als in einer Richtung tangential zu der axialen Richtung.

2. Mobile Abstützung nach Anspruch 1,
**dadurch gekennzeichnet, dass** die Speiche (4) einen Drehzapfen (8) umfasst.

3. Mobile Abstützung nach Anspruch 1 oder 2,
**dadurch gekennzeichnet, dass** das Segment (3), und insbesondere die Speiche (4), wenigstens teilweise aus flexiblem Material besteht.

4. Mobile Abstützung nach einem der vorhergehenden Ansprüche,
**dadurch gekennzeichnet, dass** die Speiche (4) in der Richtung rechtwinkelig zu der Achse abgeflacht ist.

5. Mobile Abstützung nach einem der vorhergehenden Ansprüche,
**dadurch gekennzeichnet, dass** die Speiche (4) sich in radialer Richtung verjüngt.

6. Mobile Abstützung nach einem der vorhergehenden Ansprüche,
**dadurch gekennzeichnet, dass** das Segment (3) elektrisch leitend ist, und vorzugsweise **dadurch**, dass das Segment geeignet ist, in elektrischen Kontakt mit der Geländeabgrenzung (2) gebracht zu werden, abhängig von der Drehlage des Segments (3).

7. Mobile Abstützung nach einem der vorhergehenden Ansprüche,
**dadurch gekennzeichnet, dass** das Segment (3) einen Aufstandsstreifen (5) umfasst, wobei der Aufstandsstreifen (5) in axialer Richtung gesehen breiter ist als die Speiche (4), insbesondere **dadurch**, dass der Aufstandsstreifen (5) sich in beide tangentialen Richtungen relativ zu der Speiche (4) erstreckt.

8. Mobile Abstützung nach Anspruch 7,
**dadurch gekennzeichnet, dass** die Krümmung des Aufstandsstreifens (5) im Wesentlichen gleich ist der Krümmung des Umfangs der mobilen Abstützung (1).

9. Mobile Abstützung nach einem der vorhergehenden Ansprüche,
**dadurch gekennzeichnet, dass** die Abstützung eine zentrale Nabe (6) zum Verbinden der Speichen (4) umfasst.

10. Mobile Abstützung nach Anspruch 9,
**dadurch gekennzeichnet, dass** die Geländeabgrenzung (2) geeignet ist, durch die Nabe (6) geführt zu werden.

11. Mobile Abstützung nach Anspruch 10,
**dadurch gekennzeichnet, dass** die Nabe (6) einen Schlitz aufweist, welcher sich in radialer Richtung erstreckt, zum Einführen der Geländeabgrenzung (2) von außen in das Zentrum der Nabe (6).

12. Mobile Abstützung nach Anspruch 9, 10 oder 11,
**dadurch gekennzeichnet, dass** die Abstützung eine Befestigung (12) für die Geländeabgrenzung (2) umfasst, wobei insbesondere die Befestigung (12) in axialer Richtung, relativ zu der Nabe (6) beweglich ist.

13. Mobile Abstützung nach einem der Ansprüche 9 bis 12,
**dadurch gekennzeichnet, dass** die Nabe (6) ein rohrförmiges Element (9, 10, 11) aufweist, welches in axialer Richtung orientiert ist.

14. Anordnung zum Abstützen einer Geländeabgrenzung (2) aus Draht, auf einem Boden, umfassend eine erste und eine zweite mobile Abstützung (1) nach Anspruch 13,
**dadurch gekennzeichnet, dass** die Abstützungen mittels wenigstens eines rohrförmigen Elements (9, 10, 11) miteinander verbunden sind.

15. Geländeabgrenzungssystem, umfassend eine Geländeabgrenzung (2) aus Draht und eine mobile Abstützung (1) nach einem der vorhergehenden Ansprüche, insbesondere ferner umfassend eine vorzugsweise selbstfahrende Vorrichtung zum Verschieben einer Geländeabgrenzung.

## Revendications

1. Support mobile (1) destiné à supporter une démarcation de terrain en forme de fil (2) sur un sol, ayant une pluralité de segments (3) rotatifs autour d'un axe, dans lequel chaque segment (3) comprend un rayon (4) ayant une extrémité libre, **caractérisé en ce qu'**au moins un segment (3) possède une flexibilité plus grande en direction axiale que dans une direction tangentielle à la direction axiale.

2. Support mobile selon la revendication 1, **caractérisé en ce que** le rayon (4) comprend un pivot (8).

3. Support mobile selon la revendication 1 ou 2, **caractérisé en ce que** le segment (3), et en particulier, le rayon (4), est constitué au moyen partiellement de matériau flexible.

4. Support mobile selon l'une quelconque des revendications précédentes, **caractérisé en ce que** le rayon (4) est aplati dans la direction perpendiculaire à l'axe.

5. Support mobile selon l'une quelconque des revendications précédentes, **caractérisé en ce que** le rayon (4) s'effile en direction radiale.

6. Support mobile selon l'une quelconque des revendications précédentes, **caractérisé en ce que** le segment (3) est conducteur électriquement, et de préférence **en ce que** le segment peut être amené en contact électrique avec la démarcation de terrain (2), en fonction de la position de rotation du segment (3).

7. Support mobile selon l'une quelconque des revendications précédentes, **caractérisé en ce que** le segment (3) comprend une bande de roulement (5), laquelle bande de roulement (5), vue en direction axiale, est plus large que le rayon (4), en particulier en ce que la bande de roulement (5) s'étend dans les deux directions tangentielles par rapport au rayon (4).

8. Support mobile selon la revendication 7, **caractérisé en ce que** la courbure de la bande de roulement (5) est sensiblement égale à la courbure de la circonférence du support mobile (1).

9. Support mobile selon l'une quelconque des revendications précédentes, **caractérisé en ce que** le support comprend un moyeu central (6) pour relier les rayons (4).

10. Support mobile selon la revendication 9, **caractérisé en ce que** la démarcation de terrain (2) peut être passée à travers le moyeu (6).

11. Support mobile selon la revendication 10, **caractérisé en ce que** le moyeu (6) comprend un évidement s'étendant en direction radiale pour faire passer la démarcation de terrain (2) depuis l'extérieur vers le coeur du moyeu (6).

12. Support mobile selon la revendication 9, 10 ou 11, **caractérisé en ce que** le support comprend une fixation (12) pour la démarcation de terrain (2), la fixation (12) étant en particulier mobile en direction axiale par rapport au moyeu (6).

13. Support mobile selon l'une quelconque des revendications 9 à 12, **caractérisé en ce que** le moyeu (6) comprend un élément tubulaire (9, 10, 11) orienté en direction axiale.

14. Ensemble destiné à supporter une démarcation de terrain en forme de fil (2) sur un sol, comprenant un premier et un second supports mobiles (1) selon la revendication 13, **caractérisé en ce que** les supports sont interconnectés au moyen d'au moins un élément tubulaire (9, 10, 11).

15. Système de démarcation de terrain comprenant une démarcation de terrain en forme de fil (2) et un support mobile (1) selon l'une quelconque des revendications précédentes, comprenant également en particulier un dispositif de déplacement de démarcation de terrain, de préférence, autopropulsé.
